# EUROPEAN PATENT SPECIFICATION

(11) **EP 4 265 464 B1**
(45) Date of publication and mention of the grant of the patent: **11.06.2025**
(21) Application number: 22169204.9
(22) Date of filing: 21.04.2022
(51) Int. Cl.: B60K 35/22, B60K 35/53, B60K 35/60, B60K 35/65

(54) **SCREEN ASSEMBLY FOR AN INTERIOR OF A VEHICLE, METHOD FOR CONTROLLING A POSITION OF A SCREEN COMPONENT IN AN INTERIOR OF A VEHICLE, DATA PROCESSING APPARATUS, AND SCREEN SYSTEM FOR AN INTERIOR OF A VEHICLE**
BILDSCHIRMANORDNUNG FÜR DEN INNENRAUM EINES FAHRZEUGS, VERFAHREN ZUR STEUERUNG EINER POSITION EINER BILDSCHIRMKOMPONENTE IM INNENRAUM EINES FAHRZEUGS, DATENVERARBEITUNGSVORRICHTUNG UND BILDSCHIRMSYSTEM FÜR DEN INNENRAUM EINES FAHRZEUGS
ENSEMBLE ÉCRAN POUR L'HABITACLE D'UN VÉHICULE, PROCÉDÉ DE COMMANDE D'UNE POSITION D'UN COMPOSANT D'ÉCRAN DANS L'HABITACLE D'UN VÉHICULE, APPAREIL DE TRAITEMENT DE DONNÉES, ET SYSTÈME D'ÉCRAN POUR UN HABITACLE D'UN VÉHICULE

(43) Date of publication of application: 25.10.2023
(73) Proprietor: Volvo Car Corporation, 40531 Göteborg (SE)
(72) Inventor: SEDAGHAT AMOLI, Alborz, 40531 Göteborg (SE); BLANK, Oskar, 40531 Göteborg (SE)
(74) Representative: Maiwald GmbH

(56) References cited:
- WO-A1-2016/188545
- WO-A2-2005/096710
- CN-A- 112 298 059
- DE-A1- 102007 055 246
- DE-A1- 102015 012 890
- JP-A- 2001 030 849
- US-A1- 2008 010 875
- US-A1- 2008 013 264
- US-A1- 2014 153 168
- US-A1- 2021 107 360
- US-A1- 2021 276 419
- US-A1- 2021 364 810

## Description

The present invention is directed to a method for controlling a position of a screen component in an interior of a vehicle.

The present invention also relates to a data processing apparatus.

Moreover, the present invention is directed to a screen system for an interior of a vehicle.

The interior of modern vehicles such as cars and trucks comprises at least one screen for displaying information to a user of the vehicle, e.g. a driver or a passenger.

In this context, US 2008/013264 A1 discloses an electronic apparatus comprising a display that can be adjusted in many ways.

Since information being displayed by the screen may be of relevance while the vehicle is travelling, it is important that at least the driver of the vehicle is able to clearly see the information on the screen without being distracted. WO 2016/188545 A1 shows a display assembly and a method for reducing motion sickness of a vehicle passenger which includes adapting a position of the display.

CN 112 298 059 A describes a vehicle-mounted display adjusting device.

It is an objective of the present invention to facilitate the transmission of information to the driver and other users of the vehicle.

The problem is at least partially solved or alleviated by the subject matter of the independent claims of the present invention, wherein further examples are incorporated in the dependent claims.

According to a first aspect of the invention there is provided a method for controlling a position of a screen component in an interior of a vehicle, comprising:
- receiving an information describing a position of at least one eye of a driver being located in the interior of the vehicle,
- determining a target position for the screen component as a function of the position of the at least one eye, wherein the target position is arranged within a field of view of the driver, and
- requesting the screen component to move to the target position.

In this context, the target position comprises a position component along the translation direction and around the tilting axis. Optionally, the target position also comprises a position component around the rotation axis. When applying this method, the screen component can be placed in the interior of the vehicle such that it is in the focus of the driver, i.e. such that the driver can see the information displayed on the screen unit with great ease and comfort. The same may apply to a passenger. This also enhances driving security if the driver needs to see the information while driving. As has already been explained before, the target position can also be chosen such that undesired reflections are avoided or reduced.

As has already been explained also the portion of the screen unit which extends from the instrument panel or the center console can be adapted to the amount of information to be displayed.

The information describing a position of at least one eye of the driver may be provided by a so-called eye tracking unit or eye tracking system. Such units or systems are known as such.

According to a first alternative of the invention, the target position is characterized in that a height difference between the position of the at least one eye and a center of the screen unit of the screen component is at least one of below an upper height difference threshold and above a lower height difference threshold. Thus, the target position of the screen is adapted to an eye level of the driver. Consequently, the target position may be adapted depending on a size and sitting position of the driver. In this context, it may be an objective to position the screen component such that the height difference is minimal.

According to a second alternative of the invention, the target position is characterized in that a vision angle between a horizontal direction and a vision direction connecting the at least one eye and a center of the screen unit of the screen component is at least one of below an upper vision angle threshold and above a lower vision angle threshold. Thus, the target position of the screen component lies within a focus of the driver or the information displayed on the screen unit is easily visible for the driver. Also in this respect, the target position depends on a size of the driver and a sitting position of the driver.

According to a third alternative of the invention, the target position is characterized in that a reflection angle between the screen unit of the screen component and a windshield is at least one of below an upper reflection angle threshold and above a lower reflection angle threshold. Consequently, undesired reflections are avoided or at least reduced. Consequently, the level of distraction for a driver is also reduced.

In another example, the target position may be limited by the kinematic limits of at least one of the translational guiding means, the first rotational guiding means and the second rotational guiding means. Thus, the guiding means impose certain boundaries for the target position.

In a further example, remaining components inside the interior of the vehicle may impose further limitations on the target position. For example, the windshield or portions of the instrument panel or the center console may impose such limitations. In other words, the target position must be chosen such that the screen component and other parts of the screen assembly comprising the screen component do not collide with other elements in the interior of the vehicle.

In an example, the method may further comprise receiving an information describing a position of at least one hand of the driver being located in the interior of the vehicle, and determining the target position for the screen component as a function of the position of the at least one hand. Thus, the target position of the screen component may be determined such that the hand does not obstruct the driver's line of sight towards the screen component. In a case in which based on the position of the hand also a position of a driver's arm is derived, this also applies to the driver's arm. Consequently, the information displayed on the screen unit may be easily and comfortably seen by the driver.

The information describing the position of the hand may be provided by a so-called hands-on detector. Such a hands-on detector usually is configured to detect a driver's hand on the steering wheel.

Additionally or alternatively, the position of the hand may be provided by a so-called driver monitoring system. Such a system may comprise a camera being configured to capture images of the driver. These images may be analyzed using for example an object recognition technique. Consequently, parts of the driver's body, such as the hands or arms may be detected and a corresponding position may be derived from the images captured by the driver monitoring system.

In another example, the method may comprise receiving an information describing the presence of a front seat passenger, and determining the target position of the screen component as a function of the presence of the front seat passenger. In such a case, the target positon may be determined such that both the driver and the front seat passenger can see the information displayed on the screen unit.

The information on the presence of a front seat passenger may for example be provided by a sensor arranged in the front passenger seat.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect of the invention there is provided a data processing apparatus. The data processing apparatus comprises a first communication interface being configured to provide a positioning request to the screen component. Moreover, the data processing apparatus comprises a second communication interface being configured to receive an information characterizing a position of at least one eye of a driver. Additionally, the data processing apparatus comprises means for carrying out the method according to the present invention. Such a data processing apparatus may also be designated as a control unit for a screen assembly. Thus, using such a data processing apparatus, the screen component can be placed in the interior of the vehicle such that it is in the focus of the driver, i.e. such that the driver can see the information displayed on the screen unit with great ease and comfort. This also enhances driving security if the driver needs to see the information while driving. As has already been explained before, the target position can also be chosen such that undesired reflections are avoided or reduced.

In an example, a computer program product is provided which comprises instructions which, when the program is executed by a computer, cause the computer to carry out the method of the present invention.

In another example, a computer-readable storage medium is provided which comprises instructions which, when executed by a computer, cause the computer to carry out the method of the present invention.

In an example, the data processing apparatus may further comprise a third communication interface being configured to receive an information characterizing a position of at least one hand of the driver. Consequently, the information characterizing the position of the at least one hand of the driver can be provided to the data processing apparatus. Based thereon, the target position of the screen component can be determined such that a line of sight is not obstructed by the at least one hand of the driver or a corresponding arm.

In a further example, the data processing apparatus may further comprise a fourth communication interface being configured to receive an information describing a presence of a front seat passenger. As has already been explained, based on such an information, the target position of the screen component can be determined such that both a driver and a front seat passenger can see the information displayed on the screen unit with high ease and comfort.

According to a third aspect of the invention there is provided a screen system for an interior of a vehicle. The screen system comprises a screen assembly for an interior of a vehicle. The screen assembly comprises a base component being configured for being arranged in an interior of an instrument panel or in an interior of a center console of the vehicle. Moreover, the screen assembly comprises a screen component comprising a screen unit being configured for displaying information for a user of the vehicle. Furthermore, the screen assembly comprises a translational guiding means being kinematically arranged between the screen component and the base component such that the screen component is translationally movable relative to the base component along a translation direction. The screen assembly also comprises a first rotational guiding means being kinematically arranged between the screen component and the base component such that the screen component is tiltable relative to the base component around a tilting axis. The first rotational guiding means and the vertical guiding means are independent from one another and the tilting axis is perpendicular to the translation direction. The screen system also comprises a data processing apparatus according to the present invention, wherein the data processing apparatus is coupled to the screen assembly such that a position of a screen component of the screen assembly is controllable by the data processing apparatus. Thus, the screen component can automatically be located in the interior of the vehicle such that it is in the focus of the driver, i.e. such that the driver can see the information displayed on the screen unit with great ease and comfort. At the same time driving security is enhanced and undesired reflections are avoided or reduced.

Due to the screen assembly, the screen component can assume a position along the translation direction and a position around the tilting axis. The translational position and the tilting position are independent from one another. Thus, the screen component can be positioned in the interior of the vehicle such that the displayed information is easily and clearly visible by a user of the vehicle, e.g. the driver or the passenger. In this context, the position of the screen component may be adapted to a size of the user and/or a sitting position of the user. More generally speaking, the screen component can be positioned in the focus of the user, e.g. the driver or the passenger. Consequently, the user can easily and comfortably perceive the displayed information without the need to perform big movements. Moreover, the screen component can be arranged in the interior of the vehicle such that reflections on the screen are avoided or reduced. The same applies to undesired reflections of information being provided on the screen on other components of the vehicle. This also facilitates the perception of the displayed information by the user.

In an example, the screen system further comprises an eye tracking unit. The eye tracking unit is configured to provide an information characterizing a position of at least one eye of a driver. The eye tracking unit is communicatively connected to the data processing apparatus via the second communication interface of the data processing apparatus. Consequently, a position of the screen component can be chosen as a function of the position of the at least one eye of the driver. This may be done in an automatic manner. Thus, the screen component always is in the visual focus of the driver, such that the driver can see the information displayed on the screen unit with great ease and comfort.

In the present context, being kinematically arranged between the screen component and the base component means being kinematically arranged between at least a portion of the screen component and at least a portion of the base component. Analogously, a relative movement between the screen component and the base component is to be understood as a relative movement of at least a portion of the screen component with respect to at least a portion of the base component.

It is noted that a user of the vehicle not only comprises the driver but also a front seat passenger and a back seat passenger.

In an example, the direction of translation may be generally vertical if the screen assembly is mounted in the vehicle. The tilting axis may be substantially horizontal. With respect to a forward driving direction of the vehicle, the tilting axis may extend from left to right in the interior vehicle. The surface of the screen on which the information is displayed may generally face rearward with respect to the forward driving direction.

In another example, the translational guiding means may be used to fully or partially retract the screen component inside the instrument panel or the center console. The screen component may be fully retracted in a situation in which the screen unit is not needed. In doing so, unnecessary distraction by the screen unit is avoided. The partially retracted position may be used if only a limited amount of information needs to be displayed to the user. This has the effect that the user can easily find the relevant information and is not distracted by non-relevant information or portions of the screen unit showing other content than the relevant information. More generally speaking, the portion of the screen unit which extends over the instrument panel or center console can be adapted to the amount of information to be displayed.

In an example, the screen assembly may further comprise a translational drive unit being coupled to the screen component and being configured for moving the screen component with respect to the base component along the translation direction. The drive unit may be configured to move the screen component automatically. Thus, the screen component may be positioned in the interior of the vehicle without the need for the user to physical move the screen component. The screen component may be either moved following a signal being provided by an action of the user, e.g. pushing a button or tilting a lever. Alternatively, the screen component may be moved in a fully automatic manner without any action being performed by the user. Both alternatives enhance the comfort of the user. Moreover, driving safety is enhanced if as little action as possible is required by the user.

In an example, the translational drive unit may comprise a rack and pinion mechanism and an electric motor unit being coupled to the pinion. Such a mechanism is reliable and precise at the same time. Thus, the screen component may be positioned along the translation direction in a reliable and precise manner.

In another example, the translational drive unit may comprise two rack and pinion mechanisms. In this case, the two rack and pinion mechanisms are arranged at opposite ends of the screen unit respectively. Such a translational drive unit is particularly stable.

It is noted that the rack and pinion mechanism may also provide a translational guiding functionality. Thus, the rack and pinion mechanism may also form part of the translational guiding means.

According to an example, the screen assembly may further comprise a first rotational drive unit being coupled to the screen component and being configured for tilting the screen component with respect to the base component around the tilting axis. The tilting may be performed in an automatic manner. The screen component may, thus, be either tilted around the tilting axis following a signal being provided by an action of the user, e.g. pushing a button or tilting a lever. Alternatively, the screen component may be tilted in a fully automatic manner without any action being performed by the user. Both alternatives enhance the comfort of the user. Moreover, driving safety is enhanced if as little action as possible is required by the user.

The first rotational drive unit may comprise a rotational actuator such as an electric motor. The electric motor may be coupled with a gear mechanism

In a further example, the screen assembly may comprise a second rotational guiding means being kinematically arranged between the screen component and the base component such that the screen component is rotatable relative to the base component around a rotation axis. The second rotational guiding means, the first rotational guiding means and the translational guiding means are independent from one another and the rotation axis is perpendicular to the tilting axis. The second rotational guiding means adds a degree of freedom to the positioning of the screen component in an interior of the vehicle. This additional degree of freedom is independent from the translational position and the position around the tilting axis. Thus, the screen component can be positioned in the interior of the vehicle such that the displayed information is easily and clearly visible by a user of the vehicle, e.g. the driver or the passenger. Again, the position of the screen component may be adapted to a size of the user and/or a sitting position of the user. More generally speaking, the screen component can be positioned in the focus of the user, e.g. the driver or the passenger. Due to the movability of the screen component, it can be specifically arranged in the focus of the user. Consequently, the user can easily and comfortably perceive the displayed information without the need to perform big movements. Moreover, the screen component can be arranged in the interior of the vehicle such that undesired reflections on the screen or undesired reflections of an information being displayed on the screen on other components of the vehicle are avoided or reduced. This also facilitates the perception of the displayed information by the user.

As before, being kinematically arranged between the screen component and the base component means being kinematically arranged between at least a portion of the screen component and at least a portion of the base component. Analogously, a relative movement between the screen component and the base component is to be understood as a relative movement of at least a portion of the screen component with respect to at least a portion of the base component.

In an example, the screen assembly may further comprise a second rotational drive unit being coupled to the screen component and being configured for rotating the screen component with respect to the base component around the rotation axis. The second rotational drive unit may be configured to rotate the screen component automatically. The screen component may, thus, be either rotated around the rotation axis following a signal being provided by an action of the user, e.g. pushing a button or tilting a lever. Alternatively, the screen component may be rotated in a fully automatic manner without any action being performed by the user. Both alternative enhance the comfort of the user. Moreover, driving safety is enhanced if as little action as possible is required by the user.

It is noted that, of course, the target position of the screen component and, thus, the position of the screen component in the interior of the vehicle can also be adjusted while driving. Thus, the position can be adapted to a changing sitting position of the driver or to a changing incidence of light leading to changing reflection conditions. A changing sitting position also may lead to a changing position of the at least one eye of the driver. In other words, perfect viewing conditions for the driver are maintained even though the sitting position and the incidence of light may change.

Moreover, the above described systems and methods may also be used in a vehicle which is able to drive in a partly or fully autonomous manner. In a situation in which the vehicle changes from a manual driving mode to a partly or fully autonomous driving mode, the user, especially the driver, may alter its sitting position and for example assume a more relaxed sitting position while the partly or fully autonomous driving mode is active. The position of the at least one eye of the driver is altered accordingly. In such a situation, the position of the screen component may be automatically adapted to the altered sitting position and the altered position of the eye. Thus, the driver may always have good viewing condition with respect to the information being displayed on the screen unit.

These and other aspects of the present invention will become apparent from and elucidated with reference to the examples described hereinafter.

Examples of the invention will be described in the following with reference to the following drawings.
- Figure 1: shows a screen system according to the present invention in a topview, wherein the screen system is arranged in an interior of a vehicle and comprises a screen assembly according to the present invention and a data processing apparatus according to the present invention, the data processing apparatus being configured to carry out a method according to the present invention,
- Figure 2: shows the screen system of Figure 1 in a lateral view in plane II-II of Figure 1,
- Figure 3: shows the screen assembly of Figure 1 and 2 in a more detailed view, wherein the screen component is fully extended over an instrument panel,
- Figure 4: shows the screen assembly of Figure 3, wherein the screen component is partly extended over the instrument panel,
- Figure 5: shows the screen assembly of Figures 3 and 4 without a representation of the instrument panel,
- Figure 6: shows the screen assembly in a lateral view, wherein the screen component is in a first tilted state,
- Figure 7: shows the screen assembly in a lateral view corresponding to Figure 6, wherein the screen component is in a second tilted state, and
- Figure 8: illustrates steps of the method according to the present invention.

The figures are merely schematic representations and serve only to illustrate examples of the invention. Identical or equivalent elements are in principle provided with the same reference signs.

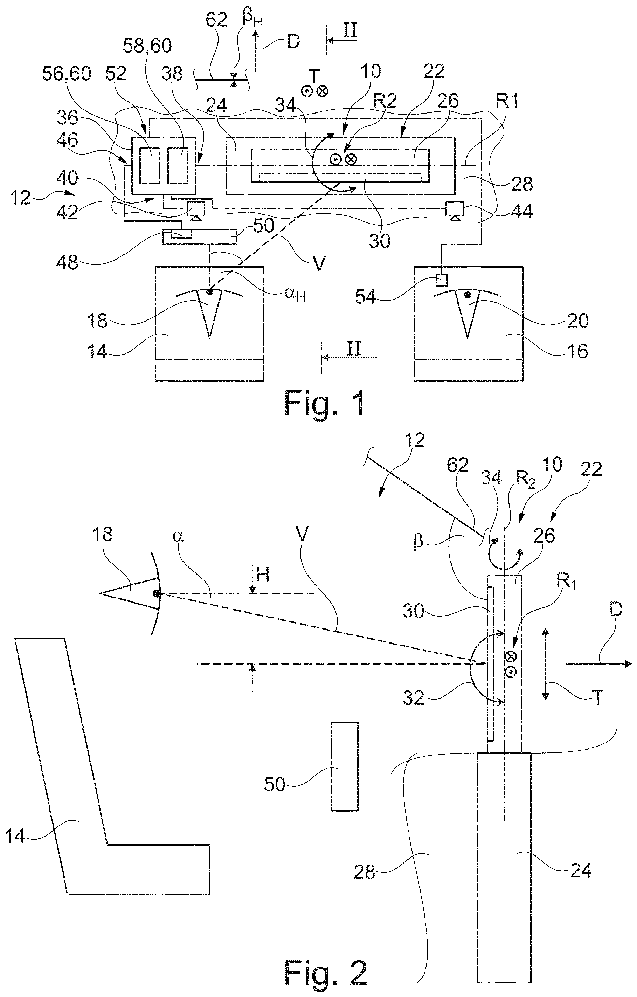

Figures 1 and 2 show a screen system 10.

The screen system 10 is arranged in an interior 12 of a vehicle.

The interior 12 also comprises a driver seat 14 and a passenger front seat 16.

A driver sitting on the driver seat 14 is represented by one eye 18.

A front seat passenger sitting on a passenger front seat 16 is represented by one eye 20.

The screen system 10 comprises a screen assembly 22 with a base component 24 and a screen component 26.

The base component 24 is arranged in an interior of an instrument panel 28 of the vehicle.

In the example of Figures 1 and 2, the screen component 26 protrudes over the instrument panel 28.

The screen component 26 comprises a screen unit 30 being configured for displaying information for a user of the vehicle, i.e. for the driver being represented by eye 18 and the front seat passenger being represented by eye 20.

The screen component 26 is movable with respect to the base component 24 in several respects.

First, the screen component 26 is translationally movable relative to the base component 24 along a translation direction T.

In the example shown in Figures 1 and 2, the translation direction T is oriented substantially vertically within the interior 12 of the vehicle.

Second, the screen component 26 is tiltable relative to the base component 24 around a tilting axis R1.

In the example shown in Figures 1 and 2, the tilting axis R1 is oriented substantially horizontally within the interior 12 of the vehicle. At the same time, the tilting axis R1 substantially extends from left to right in the interior 12 of the vehicle with respect to a forward driving direction D.

The corresponding tilting movement is illustrated by arrow 32.

Third, the screen component 26 is rotatable relative to the base component 24 around a rotation axis R2.

In the example shown in Figures 1 and 2, the rotation axis R2 is oriented substantially vertically within the interior 12 of the vehicle.

The corresponding rotational movement is illustrated by arrow 34.

Thus, the tilting axis R1 is perpendicular to the translation direction T and the rotation axis R2 is perpendicular to the tilting axis R1.

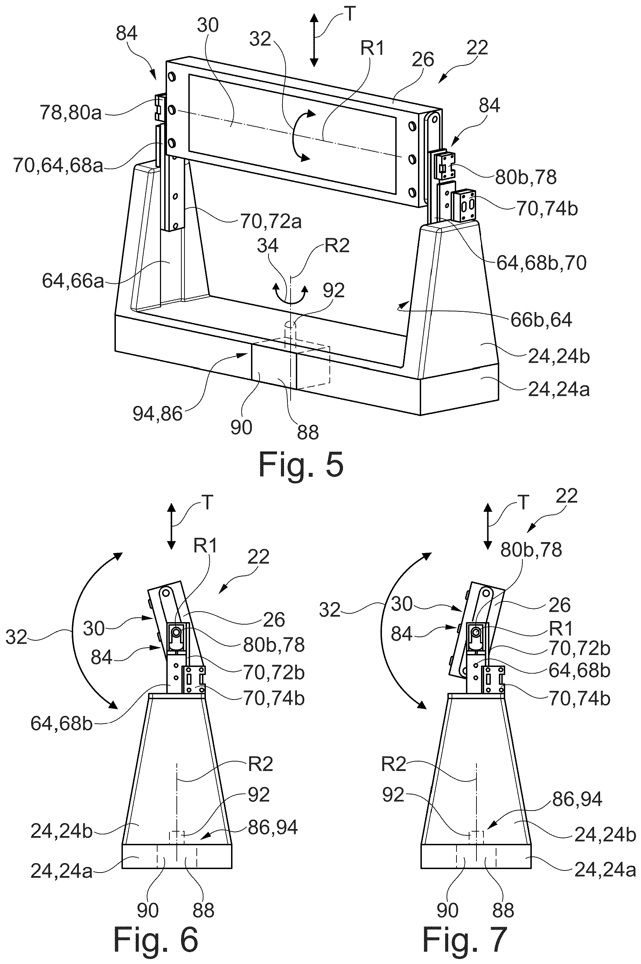

The tilting of the screen component 26 around tilting axis R1 can also be seen in Figures 6 and 7.

The rotational movement around the tilting axis R1, the rotational movement around the rotation axis R2 and the translational movement along the translation direction T may be performed independent from one another as will be explained in more detail below.

The screen system 10 also comprises a data processing apparatus 36.

The data processing apparatus 36 is coupled to the screen assembly 22 such that a position of the screen component 26 of the screen assembly 22 is controllable by the data processing apparatus 36.

To this end, the data processing apparatus 36 comprises a first communication interface 38 which is configured to provide a positioning request to the screen assembly 22, more precisely to the screen component 26.

The screen assembly 22 is communicatively connected to the data processing apparatus 36 via the first communication interface 38.

Moreover, the data processing apparatus 36 comprises a second communication interface 40 being configured to receive an information characterizing a position of at least one eye 18 of the driver.

In the example, a first eye tracking unit 42 is connected to the data processing apparatus 36 via the second communication interface 40.

The first eye tracking unit 42 is configured to provide an information characterizing the position of the eye 18.

Furthermore, also a second eye tracking unit 44 is connected to the data processing apparatus 36 via the second communication interface 40.

The second eye tracking unit 44 is configured to provide an information characterizing the position of the eye 20, i.e. at least one eye of the front seat passenger.

Thus, the second communication interface 40 is also configured to receive an information characterizing a position of at least one eye 20 of the front seat passenger.

The data processing apparatus 36 further comprises a third communication interface 46 which is configured to receive an information characterizing a position of at least one hand of the driver.

In the example, a hands-on detector 48 is connected to the data processing apparatus 36 via the third communication interface 46.

The hands-on detector 48 is arranged in a steering wheel 50 of the vehicle and is configured to provide an information characterizing the position of at least one hand of the driver.

Furthermore, the data processing apparatus 36 comprises a fourth communication interface 52 configured to receive an information describing a presence of the front seat passenger.

In the example, a seat detector 54 is connected to the data processing apparatus 36 via the fourth communication interface 52.

The seat detector 54 is configured to provide an information describing the presence of the front seat passenger.

Moreover, the data processing apparatus 36 comprises a data storage unit 56 and a data processing unit 58.

Using the data processing apparatus 36, more precisely the data storage unit 56 and the data processing unit 58, a method for controlling a position of the screen component 26 in the interior 12 of the vehicle can be performed.

Thus, the data storage unit 56 and the data processing unit 58 are means 60 for carrying out the method for controlling a position of the screen component 26 in the interior 12 of the vehicle.

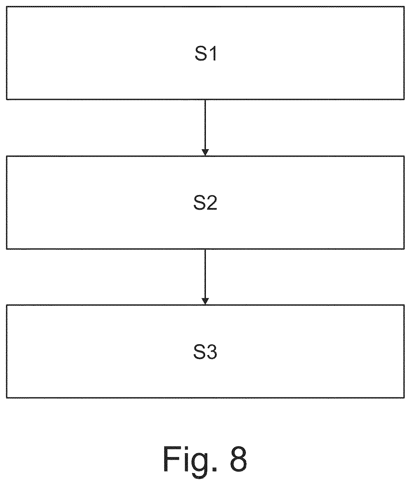

The method is illustrated in Figure 8.

A first step S1 of the method comprises receiving an information describing a position of at least one eye 18 of the driver. This information is provided by the first eye tracking unit 42 as has already been explained above.

Moreover, in the present example, the first step S1 comprises receiving an information describing a position of at least one eye 20 of the front seat passenger, if present. This information is provided by the second eye tracking unit 44 as has already been explained above.

In the present example, in the first step S1 also an information describing a position of at least one hand of the driver is received. As has already been explained, this information is provided by the hands-on detector 48.

Furthermore, the first step S1 of the present example comprises receiving an information describing the presence of a front seat passenger.

This information is provided by the seat detector 54 which has already been explained above.

A second step S2 of the method comprises determining the target position for the screen component 26.

The target position is a function of the information received in the first step.

In more detail, the target position is determined as a function of the position of the at least one eye 18 of the driver.

The target position is also determined as a function of the position of the at least one eye 20 of the front seat passenger, if present.

Furthermore, the target position is determined as a function of the position of the at least one hand.

Also the target position is determined as a function of the presence of the front seat passenger.

In the present example, it is assumed that no front seat passenger is present.

Consequently, the target position has to be within a field of view of the driver only.

In this context, the target position is determined such that a height difference H between the position of the driver 's eye 18 and the screen component 26 lies between a pre-defined lower height difference threshold and a pre-defined upper height difference threshold.

The height difference H is calculated between a center of the driver's eye 18 and a center of the screen unit 30 of the screen component 26 (cf. Figure 2).

The lower height difference threshold may be for example 10cm, 15 cm or 20cm. Generally, a low height difference means that the driver is able to comfortably see the screen component 26 and the information displayed thereon. However, the driver also needs to be able to see the environment, e.g. other road users, which are located behind the screen component 26 when regarded from the driver's position.

The upper height difference may be 25cm, 30cm or 35cm. the upper height difference is chosen such that the driver still can comfortably see the screen component 26 and the information displayed thereon. If the height difference is too large, the driver needs to bend his neck to a large extent in order to be able to see the displayed information. This is not comfortable for the driver.

Moreover, the target position is characterized in that a vision angle α between a horizontal direction and a vision direction V connecting the driver's eye 18 and a center of the screen unit 30 lies between a lower vision angle threshold and an upper vision angle threshold.

The lower vision angle threshold may be 2 degrees, 5 degrees or 8 degrees.

The upper vision angle threshold may be 10 degrees, 15 degrees or 20 degrees.

As has already been explained in connection with the height difference H, also the vision angle α needs to be chosen such that on the one hand, the driver can comfortably look beyond the screen component 26 and the screen unit 30. On the other hand, the driver needs to be able to comfortably see information being displayed on the screen unit 30.

Such a target position guarantees good viewing conditions for the driver. This means that the driver can see information being displayed on the screen unit 30 easily and comfortably.

Moreover, the target position is determined such that a reflection angle β between the screen unit 30 and a windshield 62 lies between a lower reflection angle threshold and an upper reflection angle threshold.

This has the effect that both undesired reflections in the windshield 62 and undesired reflections on the screen unit 30 are avoided or reduced. Consequently, the driver is not distracted by such reflections.

It is noted that the vision angle α and the reflection angle β have been explained in connection with Figure 2 which shows a lateral view only. However, the vision angle α and the reflection angle β, of course, may also have angular components being visible in the top view of Figure 1 only. These components are denoted α_{H} and β_{H}. In the example of Figure 1, β_{H} is 0 degrees. The above explanations concerning the vision angle and the reflection angle of course also apply to the components α_{H} and β_{H}.

In a third step S3 of the method, the screen component is requested to move to the target position. This is done by sending a corresponding control signal from the first communication interface 38 to the screen assembly 22.

In this context, the target positon may relate to a position of the screen component 26 in which a front surface of the screen unit 30 is perpendicular to the viewing direction V of the driver.

It is noted that in a case in which the presence of a front seat passenger is detected, the target position, of course, needs to be determined such that also the front seat passenger is able to see information being displayed on the screen unit 30.

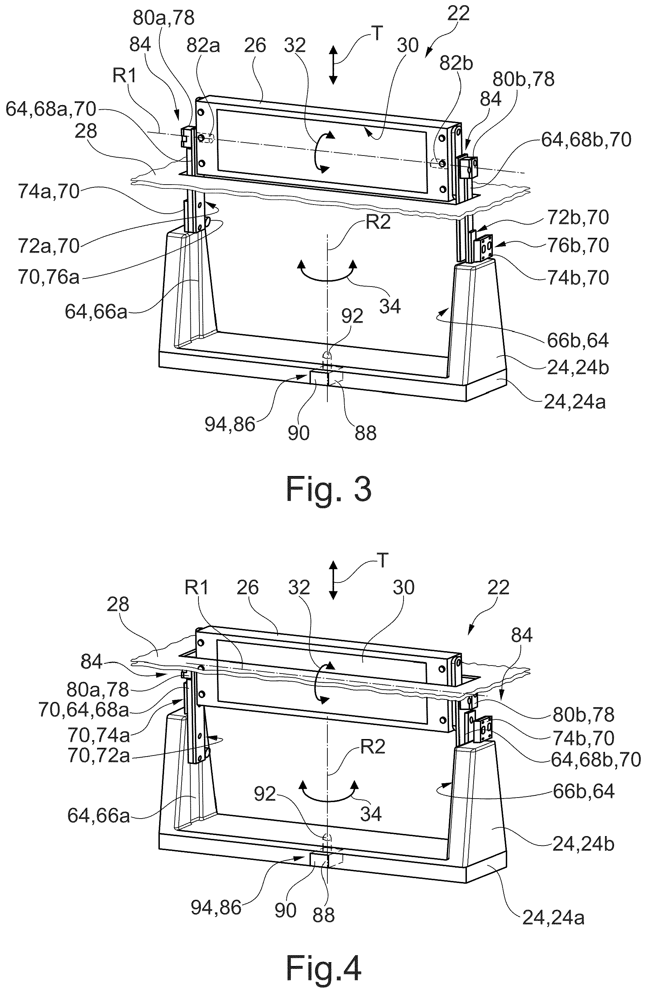

The screen assembly 22 will now be explained in more detail in connection with Figures 3 to 7.

The base component 24 is composed of a first, plate shaped part 24a and a second, U-shaped part 24b.

The screen component 26 is supported on the base component 24, more precisely on the second part 24b thereof, via a translational guiding means 64.

The translational guiding means 64 is kinematically arranged between the screen component 26 and the base component 24 and, thus, makes it possible to move the screen component 26 with respect to the base component 24 along the translation direction T.

The translational guiding means 64 comprises two slots 66a, 66b which hare arranged at an interior side of the legs of the U-shape of the second part 24b respectively.

Moreover, the translational guiding means 64 comprises two guiding arms 68a, 68b which are guided in the slots 66a, 66b respectively. An end of each of the guiding arms 68a, 68b is supported on the screen component 26.

Thus, the screen component 26 can be moved relative to the base component 24 by sliding the guiding arms 68a, 68b in the respective slots 66a, 66b.

The screen assembly 22 also comprises a translational drive unit 70 being coupled to the screen component 26 and being configured for automatically moving the screen component 26 with respect to the base component 24 along the translation direction T.

The translational drive unit 70 comprises two toothings 72a, 72b which are arranged on lateral sides of the guiding arms 68a, 68b respectively.

The guiding arms 68a, 68b thus form racks.

Moreover, the translational drive unit 70 comprises two motor units 74a 74b. Each of the motor units 74a, 74b comprises an electric motor and a pinion 76a, 76b being mounted to an output shaft of the motors respectively.

The arms 68a, 68b forming racks and the pinions 76a, 76b form a rack and pinion mechanism.

Thus, the screen component 26 may be automatically moved along the translation direction T by operating the motor units 74a, 74b.

The screen assembly 22 also comprises a first rotational guiding means 78 being kinematically arranged between the screen component 26 and the base component 24 such that the screen component 26 is tiltable relative to the base component 24 around the tilting axis R1.

The screen component 26 is mounted on each of the guiding arms 68a, 68b via a motor unit 80a, 80b respectively.

Each of the motor units 80a, 80b comprises a motor shaft 82a, 82b and the screen component 26 is connected to the motor shafts 82a, 82b.

Thus, the screen component 26 can be tilted relative to the base component 24 by turning the motor shafts 82a, 82b with respect to the remaining parts of the motor units 80a, 80b.

The screen component 26 can be automatically tilted by actuating the motor units 80a, 80b. Thus, the motor units 80a, 80b also form a first rotational drive unit 84.

Furthermore, the screen assembly 22 comprising a second rotational guiding means 86 being kinematically arranged between the screen component 26 and the base component 24. More precisely, the second rotational guiding means 86 is arranged between the first part 24a of the base component 24 and the second part 24b of the base component 24.

Using the second rotational guiding means 86, the screen component 26 is rotatable relative to the first part 24a of the base component 24 around the rotation axis R2.

The first part 24a and the second part 24b are connected via a motor unit 88. The motor unit 88 comprises a motor body 90 and a motor shaft 92.

In the present example, the motor body 90 is arranged in the first part 24a and the motor shaft 92 is connected to the second part 24b.

Thus, the screen component 26 can be rotated around rotation axis R2 by turning the motor shaft 92 relative to the motor body 90.

This can be done automatically by actuating the motor unit 88. Thus, the motor unit 88 also forms a second rotational drive unit 94 for automatically rotating the screen component 26 with respect to the base component 24 around the rotation axis R2.

It is noted that the translational drive unit 70, the first rotational drive unit 84, and the second rotational drive unit 94 may be operated independent form one another. Consequently, the rotational movement around the tilting axis R1, the rotational movement around the rotation axis R2 and the translational movement along the translation direction T may be performed independent from one another.

As can be seen from a comparison of Figures 3 and 4, the translational guiding means 64 and the translational drive unit 70 may also be used to make the screen component 26 extend fully or partially over the instrument panel 28. Thus, the portion of the screen unit 30 which can be seen may be adapted to an amount and a type of information to be displayed to the driver or the front seat passenger.

### LIST OF REFERENCE SIGNS

- 10: screen system
- 12: interior
- 14: driver seat
- 16: front passenger seat
- 18: driver's eye
- 20: front seat passenger's eye
- 22: screen assembly
- 24: base component
- 24a: first part of the base component
- 24b: second part of the base component
- 26: screen component
- 28: instrument panel
- 30: screen unit
- 32: arrow
- 34: arrow
- 36: data processing apparatus
- 38: first communication interface
- 40: second communication interface
- 42: first eye tracking unit
- 44: second eye tracking unit
- 46: third communication interface
- 48: hands-on detector
- 50: steering wheel
- 52: fourth communication interface
- 54: seat detector
- 56: data storage unit
- 58: data processing unit
- 60: means for carrying out a method for controlling a position of a screen component
- 62: windshield
- 64: translational guiding means
- 66a: slot
- 66b: slot
- 68a: guiding arm
- 68b: guiding arm
- 70: translational drive unit
- 72a: toothing
- 72b: toothing
- 74a: motor unit
- 74b: motor unit
- 76a: pinion
- 76b: pinion
- 78: first rotational guiding means
- 80a: motor unit
- 80b: motor unit
- 82a: motor shaft
- 82b: motor shaft
- 84: first rotational drive unit
- 86: second rotational guiding means
- 88: motor unit
- 90: motor body
- 92: motor shaft
- 94: second rotational drive unit

- D: forward driving direction
- R1: tilting axis
- R2: rotation axis
- S1: first step
- S2: second step
- S3: third step
- T: translation direction

## Claims

1. A method for controlling a position of a screen component (26) in an interior (12) of a vehicle, the screen component comprising a screen unit (30), the method comprising:
- receiving an information describing a position of at least one eye (18) of a driver being located in the interior (12) of the vehicle,
- determining a target position for the screen component (26) as a function of the position of the at least one eye (18), wherein the target position is arranged within a field of view of the driver, and
- requesting the screen component (26) to move to the target position,
wherein the target position is **characterized in that** a height difference (H) between the position of the at least one eye (18) and the center of the screen unit (30) of the screen component (26) is at least one of below an upper height difference threshold and above a lower height difference threshold, and/or
a vision angle (α) between a horizontal direction and a vision direction (V) connecting the at least one eye (18) and the center of the screen unit (30) of the screen component (26) is at least one of below an upper vision angle threshold and above a lower vision angle threshold, and/or a reflection angle (β) between the screen unit (30) of the screen component (26) and a windshield (62) is at least one of below an upper reflection angle threshold and above a lower reflection angle threshold.

2. The method according to claim 1, further comprising receiving an information describing a position of at least one hand of the driver being located in the interior (12) of the vehicle, and determining the target position for the screen component (26) as a function of the position of the at least one hand.

3. The method according to claim 1 to 2, further comprising receiving an information describing the presence of a front seat passenger, and determining the target position of the screen component as a function of the presence of the front seat passenger.

4. A data processing apparatus (36) comprising:
- a first communication interface (38) being configured to provide a positioning request to the screen component (26), and
- a second communication interface (40) being configured to receive an information characterizing a position of at least one eye (18) of a driver,
- means (60) for carrying out the method of any one of claims 1 to 3.

5. The data processing apparatus (36) of claim 4, further comprising a third communication interface (46) being configured to receive an information characterizing a position of at least one hand of the driver and/or a fourth communication interface (52) being configured to receive an information describing a presence of a front seat passenger.

6. A screen system (10) for an interior (12) of a vehicle, the screen system (10) comprising a screen assembly (22) comprising
a base component (24, 24a, 24b) being configured for being arranged in an interior of an instrument panel (28) or in an interior of a center console of the vehicle,
a screen component (26) comprising a screen unit (30) being configured for displaying information for a user of the vehicle,
a translational guiding means (64) being kinematically arranged between the screen component (26) and the base component (24, 24a, 24b) such that the screen component (26) is translationally movable relative to the base component (24, 24a, 24b) along a translation direction (T),
a first rotational guiding means (78) being kinematically arranged between the screen component (26) and the base component (24, 24a, 24b) such that the screen component (26) is tiltable relative to the base component (24, 24a, 24b) around a tilting axis (R1),
wherein the first rotational guiding means (78) and the translational guiding means (64) are independent from one another and the tilting axis (R1) is perpendicular to the translation direction (T), and
a data processing apparatus (36) according to claim 4 or 5,
wherein the data processing apparatus (36) is coupled to the screen assembly (22) such that a position of a screen component (26) of the screen assembly (22) is controllable by the data processing apparatus (36).

7. The screen system (10) according to claim 6, further comprising an eye tracking unit (42) being configured to provide an information characterizing a position of at least one eye (18) of a driver, the eye tracking unit (42) being communicatively connected to the data processing apparatus (36) via the second communication interface (40) of the data processing apparatus (36).

8. The screen system (10) of claim 6 or 7, wherein the screen assembly (22) further comprises a translational drive unit (70) being coupled to the screen component (26) and being configured for moving the screen component (26) with respect to the base component (24, 24a, 24b) along the translation direction (T).

9. The screen system (10) of any one of claims 6 to 8, wherein the screen assembly (22) further comprises a first rotational drive unit (84) being coupled to the screen component (26) and being configured for tilting the screen component (26) with respect to the base component (24, 24a, 24b) around the tilting axis (R1).

10. The screen system (10) of any one of claims 6 to 9, wherein the screen assembly (22) further comprising a second rotational guiding means (86) being kinematically arranged between the screen component (26) and the base component (24, 24a, 24b) such that the screen component (26) is rotatable relative to the base component (24, 24a, 24b) around a rotation axis (R2), wherein the second rotational guiding means (86), the first rotational guiding means (78) and the vertical guiding means (64) are independent from one another and the rotation axis (R2) is perpendicular to the tilting axis (R1).

11. The screen system (10) of claim 10, wherein the screen assembly (22) further comprises a second rotational drive unit (94) being coupled to the screen component (26) and being configured for rotating the screen component (26) with respect to the base component (24, 24a, 24b) around the rotation axis (R2).

## Patentansprüche

1. Verfahren zum Steuern einer Position einer Bildschirmkomponente (26) in einem Innenraum (12) eines Fahrzeugs, wobei die Bildschirmkomponente eine Bildschirmeinheit (30) umfasst, wobei das Verfahren umfasst:
- Empfangen einer Information, die eine Position mindestens eines Auges (18) eines Fahrers beschreibt, der sich in dem Innenraum (12) des Fahrzeugs befindet,
- Bestimmen einer Zielposition für die Bildschirmkomponente (26) als eine Funktion der Position des mindestens einen Auges (18), wobei die Zielposition innerhalb eines Sichtfeldes des Fahrers angeordnet ist, und
- Auffordern der Bildschirmkomponente (26), sich zu der Zielposition zu bewegen,
wobei die Zielposition **dadurch gekennzeichnet ist, dass** ein Höhenunterschied (H) zwischen der Position des mindestens einen Auges (18) und der Mitte der Bildschirmeinheit (30) der Bildschirmkomponente (26) mindestens eines von unter einer oberen Höhenunterschiedschwelle und über einer unteren Höhenunterschiedschwelle ist, und/oder ein Sichtwinkel (α) zwischen einer horizontalen Richtung und einer Sichtrichtung (V), die das mindestens eine Auge (18) und die Mitte der Bildschirmeinheit (30) der Bildschirmkomponente (26) verbindet, mindestens eines von unter einer oberen Sichtwinkelschwelle und über einer unteren Sichtwinkelschwelle ist, und/oder ein Reflexionswinkel (β) zwischen der Bildschirmeinheit (30) der Bildschirmkomponente (26) und einer Windschutzscheibe (62) mindestens eines von unter einer oberen Reflexionswinkelschwelle und über einer unteren Reflexionswinkelschwelle ist.

2. Verfahren nach Anspruch 1, umfassend des Weiteren:
Empfangen einer Information, die eine Position mindestens einer Hand des Fahrers, der sich in dem Innenraum (12) des Fahrzeugs befindet, beschreibt, und Bestimmen der Zielposition für die Bildschirmkomponente (26) als eine Funktion der Position der mindestens einen Hand.

3. Verfahren nach Anspruch 1 und 2, umfassend des Weiteren:
Empfangen einer Information, die die Anwesenheit eines Beifahrers beschreibt, und Bestimmen der Zielposition der Bildschirmkomponente als eine Funktion der Anwesenheit des Beifahrers.

4. Datenverarbeitungsvorrichtung (36), umfassend:
- eine erste Kommunikationsschnittstelle (38), die dazu eingerichtet ist, eine Positionierungsanforderung an die Bildschirmkomponente (26) zu übermitteln, und
- eine zweite Kommunikationsschnittstelle (40), die dazu eingerichtet ist, eine Information zu empfangen, die eine Position mindestens eines Auges (18) eines Fahrers charakterisiert,
- ein Mittel (60) zum Ausführen des Verfahrens nach einem der Ansprüche 1 bis 3.

5. Datenverarbeitungsvorrichtung (36) nach Anspruch 4, des Weiteren umfassend eine dritte Kommunikationsschnittstelle (46), die dazu eingerichtet ist, eine Information zu empfangen, die eine Position mindestens einer Hand des Fahrers charakterisiert, und/oder eine vierte Kommunikationsschnittstelle (52), die dazu eingerichtet ist, eine Information zu empfangen, die die Anwesenheit eines Beifahrers beschreibt.

6. Bildschirmsystem (10) für einen Innenraum (12) eines Fahrzeugs, wobei das Bildschirmsystem (10) eine Bildschirmanordnung (22) umfasst, umfassend:
eine Basiskomponente (24, 24a, 24b), die dazu eingerichtet ist, in einem Inneren eines Armaturenträgers (28) oder in einem Inneren einer Mittelkonsole des Fahrzeugs angeordnet zu werden,
eine Bildschirmkomponente (26), die eine Bildschirmeinheit (30) umfasst, die dazu eingerichtet ist, Informationen für einen Benutzer des Fahrzeugs anzuzeigen,
ein Translationsführungsmittel (64), das kinematisch zwischen der Bildschirmkomponente (26) und der Basiskomponente (24, 24a, 24b) so angeordnet ist, dass die Bildschirmkomponente (26) relativ zu der Basiskomponente (24, 24a, 24b) entlang einer Translationsrichtung (T) translational beweglich ist,
ein erstes Rotationsführungsmittel (78), das kinematisch zwischen der Bildschirmkomponente (26) und der Basiskomponente (24, 24a, 24b) so angeordnet ist, dass die Bildschirmkomponente (26) relativ zu der Basiskomponente (24, 24a, 24b) um eine Neigungsachse (R1) herum neigbar ist,
wobei das erste Rotationsführungsmittel (78) und das Translationsführungsmittel (64) voneinander unabhängig sind und die Neigungsachse (R1) senkrecht zu der Translationsrichtung (T) verläuft, und
eine Datenverarbeitungsvorrichtung (36) nach Anspruch 4 oder 5,
wobei die Datenverarbeitungsvorrichtung (36) mit der Bildschirmanordnung (22) so gekoppelt ist, dass eine Position einer Bildschirmkomponente (26) der Bildschirmanordnung (22) durch die Datenverarbeitungsvorrichtung (36) steuerbar ist.

7. Bildschirmsystem (10) nach Anspruch 6, das des Weiteren eine Augenverfolgungseinheit (42) umfasst, die dazu eingerichtet ist, eine Information bereitzustellen, die eine Position mindestens eines Auges (18) eines Fahrers charakterisiert, wobei die Augenverfolgungseinheit (42) über die zweite Kommunikationsschnittstelle (40) der Datenverarbeitungsvorrichtung (36) kommunikativ mit der Datenverarbeitungsvorrichtung (36) verbunden ist.

8. Bildschirmsystem (10) nach Anspruch 6 oder 7, wobei die Bildschirmanordnung (22) des Weiteren eine Translationsantriebseinheit (70) umfasst, die mit der Bildschirmkomponente (26) gekoppelt ist und dazu eingerichtet ist, die Bildschirmkomponente (26) in Bezug auf die Basiskomponente (24, 24a, 24b) entlang der Translationsrichtung (T) zu bewegen.

9. Bildschirmsystem (10) nach einem der Ansprüche 6 bis 8, wobei die Bildschirmanordnung (22) des Weiteren eine erste Rotationsantriebseinheit (84) umfasst, die mit der Bildschirmkomponente (26) gekoppelt ist und dazu eingerichtet ist, die Bildschirmkomponente (26) in Bezug auf die Basiskomponente (24, 24a, 24b) um die Neigungsachse (R1) herum zu neigen.

10. Bildschirmsystem (10) nach einem der Ansprüche 6 bis 9, wobei die Bildschirmanordnung (22) des Weiteren ein zweites Rotationsführungsmittel (86) umfasst, das kinematisch zwischen der Bildschirmkomponente (26) und der Basiskomponente (24, 24a, 24b) so angeordnet ist , dass die Bildschirmkomponente (26) relativ zu der Basiskomponente (24, 24a, 24b) um eine Rotationsachse (R2) herum drehbar ist, wobei das zweite Rotationsführungsmittel (86), das erste Rotationsführungsmittel (78) und das vertikale Führungsmittel (64) voneinander unabhängig sind und die Rotationsachse (R2) senkrecht zu der Neigungsachse (R1) verläuft.

11. Bildschirmsystem (10) nach Anspruch 10, wobei die Bildschirmanordnung (22) des Weiteren eine zweite Rotationsantriebseinheit (94) umfasst, die mit der Bildschirmkomponente (26) gekoppelt ist und dazu eingerichtet ist, die Bildschirmkomponente (26) in Bezug auf die Basiskomponente (24, 24a, 24b) um die Rotationsachse (R2) herum zu drehen.

## Revendications

1. Procédé pour commander une position d'un composant d'écran (16) dans un intérieur (12) d'un véhicule, le composant d'écran comprenant une unité d'écran (30), le procédé comprenant de :
- recevoir une information décrivant une position d'au moins un œil (18) d'un conducteur étant situé dans l'intérieur (12) du véhicule,
- déterminer une position cible pour le composant d'écran (16) en fonction de la position du au moins un œil (18), dans lequel la position cible est situé dans les limites d'un champ de vision du conducteur, et
- demander au composant d'écran (16) de se déplacer jusqu'à la position cible,
dans lequel la position cible est **caractérisée en ce qu'**une différence de hauteur (H) entre la position du au moins un œil (18) et le centre de l'unité d'écran (30) du composant d'écran (16) est au moins un parmi en dessous d'un seuil supérieur de différence de hauteur et au-dessus d'un seuil inférieur de différence de hauteur, et/ou
un angle de vision (α) entre une direction horizontale et une direction de vision (V) reliant le au moins un œil (18) et le centre de l'unité d'écran (30) du composant d'écran (26) est au moins un parmi en dessous d'un seuil supérieur d'angle de vision et au-dessus d'un seuil inférieur d'angle de vision, et/ou
un angle de réflexion (β) entre l'unité d'écran (30) du composant d'écran (26) et un pare-brise (62) est au moins un parmi en dessous d'un seuil supérieur d'angle de réflexion et au-dessus d'un seuil inférieur d'angle de réflexion.

2. Procédé selon la revendication 1, comprenant en outre de recevoir une information décrivant une position d'au moins une main du conducteur étant situé dans l'intérieur (12) du véhicule, et de déterminer la position cible pour le composant d'écran (26) en fonction de la position de la au moins une main.

3. Procédé selon les revendications 1 à 2, comprenant en outre de recevoir une information décrivant la présence d'un occupant de siège passager avant, et de déterminer la position cible du composant d'écran en fonction de la présence de l'occupant de siège passager avant.

4. Appareil de traitement de données (36) comprenant :
- une première interface de communication (38) étant configurée pour transmettre une demande de positionnement au composant d'écran (26), et
- une deuxième interface de communication (40) étant configurée pour recevoir une information caractérisant une position d'au moins un œil (18) d'un conducteur,
- un moyen (60) pour mettre en œuvre le procédé de l'une quelconque des revendications 1 à 3.

5. Appareil de traitement de données (36) selon la revendication 4, comprenant en outre une troisième interface de communication (46) étant configurée pour recevoir une information caractérisant une position d'au moins une main du conducteur et/ou une quatrième interface de communication (52) étant configurée pour recevoir une information décrivant une présence d'un occupant de siège passager avant.

6. Système d'écran (10) pour un intérieur (12) d'un véhicule, le système d'écran (10) comprenant un ensemble d'écran (22) comprenant :
un composant de base (24, 24a, 24b) étant configuré pour être agencé dans un intérieur d'un tableau de bord (28) ou dans un intérieur d'une console centrale du véhicule,
un composant d'écran (26) comprenant une unité d'écran (30) étant configurée pour afficher des informations destinées à un utilisateur du véhicule,
un moyen de guidage en translation (64) étant agencécinématiquement entre le composant d'écran (26) et le composant de base (24, 24a, 24b) de telle sorte que le composant d'écran (26) peut être déplacé en translation par rapport au composant de base (24, 24a, 24b) le long d'une direction de translation (T),
un premier moyen de guidage en rotation (78) étant agencé cinématiquement entre le composant d'écran (26) et le composant de base (24, 24a, 24b) de telle sorte que le composant d'écran (26) est inclinable par rapport au composant de base (24, 24a, 24b) autour d'un axe d'inclinaison (R1),
dans lequel le premier moyen de guidage en rotation (78) et le moyen de guidage en translation (64) sont indépendants l'un de l'autre et l'axe d'inclinaison (R1) est perpendiculaire à la direction de translation (T), et un appareil de traitement de données (36) selon la revendication 4 ou 5,
dans lequel l'appareil de traitement de données (36) est couplé à l'ensemble d'écran (22) de telle sorte qu'une position d'un composant d'écran (26) de l'ensemble d'écran (22) peut être commandée par l'appareil de traitement de données (36).

7. Système d'écran (10) selon la revendication 6, comprenant en outre une unité de suivi oculaire (42) étant configurée pour fournir une information caractérisant une position d'au moins un œil (18) d'un conducteur, l'unité de suivi oculaire (42) étant reliée de manière communicante à l'appareil de traitement de données (36) via la deuxième interface de communication (40) de l'appareil de traitement de données (36).

8. Système d'écran (10) selon la revendication 6 ou 7, dans lequel l'ensemble d'écran (22) comprend en outre une unité d'entraînement en translation (70) étant couplée au composant d'écran (26) et étant configurée pour déplacer le composant d'écran (26) par rapport au composant de base (24, 24a, 24b) le long de la direction de translation (T).

9. Système d'écran (10) selon l'une quelconque des revendications 6 à 8, dans lequel l'ensemble d'écran (22) comprend en outre une première unité d'entraînement en rotation (84) étant couplée au composant d'écran (26) et étant configurée pour incliner le composant d'écran (26) par rapport au composant de base (24, 24a, 24b) autour de l'axe d'inclinaison (R1).

10. Système d'écran (10) selon l'une quelconque des revendications 6 à 9, dans lequel l'ensemble d'écran (22) comprend en outre un second moyen de guidage en rotation (86) étant agencé cinématiquement entre le composant d'écran (26) et le composant de base (24, 24a, 24b) de telle sorte que le composant d'écran (26) peut tourner par rapport au composant de base (24, 24a, 24b) autour d'un axe de rotation (R2), dans lequel le second moyen de guidage en rotation (86), le premier moyen de guidage en rotation (78) et le moyen de guidage vertical (64) sont indépendants les uns des autres et l'axe de rotation (R2) est perpendiculaire à l'axe d'inclinaison (R1).

11. Système d'écran (10) selon la revendication 10, dans lequel l'ensemble d'écran (22) comprend en outre une seconde unité d'entraînement en rotation (94) étant couplée au composant d'écran (26) et étant configurée pour faire tourner le composant d'écran (26) par rapport au composant de base (24, 24a, 24b) autour de l'axe de rotation (R2).
